# EUROPÄISCHE PATENTANMELDUNG

(11) **EP 0 857 614 A2**
(43) Veröffentlichungstag der Anmeldung: **12.08.1998**
(21) Anmeldenummer: 98101771.8
(22) Anmeldetag: 02.02.1998
(51) Int. Cl.: B60R 5/04

(54) **Personenkraftwagen mit Heckkofferraum**

(30) Priorität: 05.02.1997 DE 19704268
(71) Anmelder: Bayerische Motoren Werke Aktiengesellschaft, 80788 München (DE)
(72) Erfinder: Pregl, Alexander, 80999 München (DE)

(57) **Zusammenfassung**

Ein Pkw mit variablem Kofferraumvolumen und geringem Geräuschpegel im Personeninnenraum (2) weist eine vor- und zurückbewegliche Trennwand (3) zwischen dem Kofferraum (1) und dem Innenraum (2) auf, ferner vor- und zurückbewegliche Rücksitze (9). Zwischen der Trennwand (3) und dem vorderen Kofferraumrand (11) ist eine akustische Abdichtung, z. B. ein Faltenbalg (8) vorgesehen.

## Beschreibung

Bei den herkömmlichen Limousinen ist zwischen dem Kofferraum und dem Personeninnenraum eine starr angebundene, geschweißte Trennwand vorgesehen. Damit können u.a. Geräusche, insbesondere hochfrequente Geräusche im Kofferraum nicht in den Innenraum gelangen. Das Kofferraumvolumen ist begrenzt.

Ferner sind 2-BOX-Limousinen und Touringfahrzeuge mit verschiebbarer Rücksitzbank bekannt, um den Laderaum zu vergrößern. Durch den großen Innenraum besitzen diese Fahrzeuge jedoch in der Regel einen deutlich höheren Schallpegel als Limousinen mit abgetrenntem Kofferraum.

Aufgabe der Erfindung ist es, einen Pkw mit variablem Kofferraumvolumen bereitzustellen, ohne den geringen Geräuschpegel im Innenraum einer herkömmlichen Limousine zu erhöhen.

Dies wird erfindungsgemäß mit dem im Anspruch 1 gekennzeichneten Pkw erreicht. In den Unteransprüchen sind vorteilhafte Ausgestaltungen der Erfindung angegeben.

Der erfindungsgemäße Pkw weist eine vor- und zurückbewegliche Trennwand auf, die über eine akustische Abdeckung mit dem Kofferraumrand verbunden ist.

Die akustische Abdeckung kann beispielsweise durch einen Faltenbalg gebildet sein, der an seinem einen Ende an der Trennwand und mit seinem anderen Ende an dem vorderen Randbereich des Kofferraums befestigt ist. Die akustische Abdichtung kann jedoch auch in anderer Weise ausgebildet sein, beispielsweise als ein an der Kofferrauminnenwand anliegender, an der Trennwand befestigter Stutzen, der teleskopartig in den Kofferraum geschoben bzw. aus diesem herausgezogen werden kann.

Damit die Trennwand und die akustische Abdichtung den Kofferraum vom Personeninnenraum optimal akustisch isolieren, weisen sie eine entsprechende Masse auf. Dazu können sie beispielsweise mit einer Schwerschicht versehen sein.

Bei einer herkömmlichen Limousine mit starr angebundener, geschweißter Kofferraumtrennwand werden aus dem Trägerbereich Kräfte in die Trennwand geleitet, die zu einer Eigenschwingung der Trennwand im Bereich von 3 bis 5 Hz führen. Im Gegensatz dazu ist erfindungsgemäß die Trennwand durch die akustische Abdichtung vorzugsweise weich aufgehängt. Dadurch weist der erfindungsgemäße Pkw im Personeninnenraum nicht nur einen einer herkömmlichen Limousine entsprechenden geringen Geräuschpegel auf, vielmehr wird die Innenraumakustik gegenüber einer herkömmlichen Limousine sogar noch verbessert.

Zur Verstellbarkeit der Kofferraumtrennwand sind erfindungsgemäß auch die Rücksitze vor- und zurückverstellbar ausgebildet. Dazu kann beispielsweise die Rückenlehne der Rücksitze zusätzlich nach vorne verschwenkbar sein. Vorzugsweise sind jedoch die Rücksitze entsprechend den Vordersitzen z.B. auf Sitzschienen vor- und zurückverfahrbar ausgebildet.

Durch Bewegung der Rücksitze und der Trennwand nach vorne kann damit der Kofferraum des erfindungsgemäßen Pkw vergrößert werden.

Die Trennwand ist mit einer Fangvorrichtung versehen, welche die Bewegung der Trennwand nach vorne begrenzt. Die Fangvorrichtung kann z.B. ein Fangband, beispielsweise ein Stahlseil, sein. Dadurch wird sichergestellt, daß bei starkem Bremsen oder einem Unfall die Trennwand durch die Gepäckstücke im Kofferraum nicht in den Personeninnenraum gerissen wird.

Die Variabilität des erfindungsgemäßen Pkw wird weiter erhöht, wenn die Rücksitze vor- und zurückverfahrbar und zugleich mit verstellbaren Rückenlehnen ausgebildet sind. Bei entsprechend weit zurückbewegter Trennwand kann damit, insbesondere wenn die Hutablage weggelassen oder entsprechend gestaltet ist, die Rückenlehne so weit nach hinten verstellt werden, daß sie eine Liegeposition einnimmt. Damit wird der Komfort des Pkw auf den Rücksitzen wesentlich verbessert.

Um eine Durchlade variabler Größe zu schaffen, weist der Rücksitz nicht nur eine durchgehende, sondern wenigstens zwei, vorzugsweise unterschiedlich lange, nach vorne verschwenkbare Rückenlehnen auf. Bei einer solchen Teilung der Rückenlehne führt die starre Trennwand bei starkem Bremsen oder einem Unfall zu einer gleichmäßigen Verteilung der Kräfte auf die Rückenlehnen, die auf die Gepäckstücke ausgeübt werden.

Damit durch Umklappen wenigstens einer Rückenlehne eine Durchlade gebildet wird, ist die Trennwand lösbar befestigt, so daß sie z.B. nach hinten geklappt oder herausgenommen werden kann.

In ihrer Normalposition ist die Trennwand vorzugsweise mit wenigstens einem Querträger und/oder den Stützträgern verriegelbar und verschließbar ausgebildet, um ein unbefugtes Eindringen in den Kofferraum über den Personeninnenraum zu verhindern.

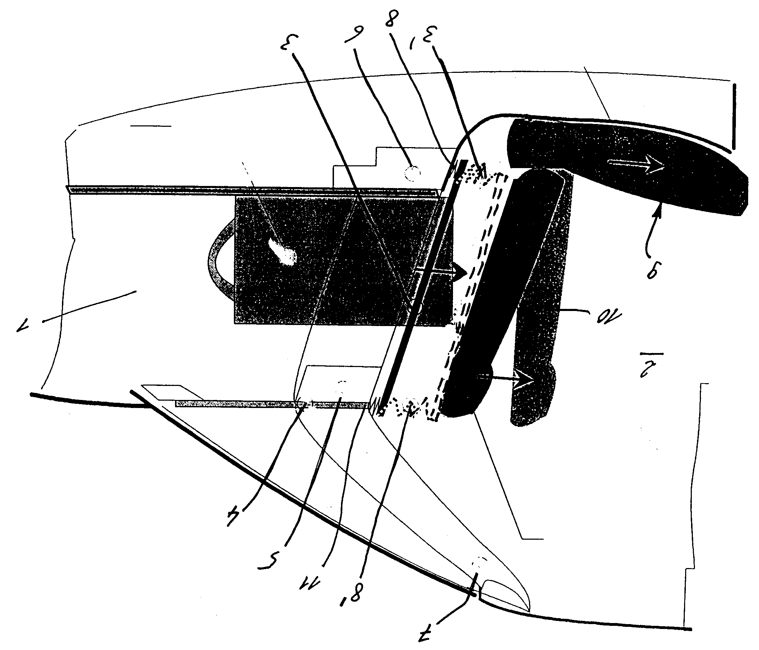

Nachstehend ist eine Ausführungsform des erfindungsgemäßen Pkw anhand der Zeichnung näher erläutert, deren einzige Figur schematisch einen Schnitt durch den Heckbereich einer Limousine zeigt.

Der Pkw weist danach einen Kofferraum 1 auf, der von dem Personeninnenraum 2 nach vorne durch eine Trennwand 3 und nach oben durch die Hutablage 4 abgetrennt ist.

Die Trennwand 3 ist in der in der Zeichnung als durchgehender Balken dargestellten, hinteren Normalposition mit den oberen und den unteren Querträgern 5, 6 sowie dem rechten Stützträger 7 und dem nicht dargestellten linken Stützträger verriegelt.

Die Trennwand 3 ist von der hinteren Normalposition in eine vordere, mit 3' bezeichnete Position bewegbar, die gestrichelt dargestellt ist. Damit die Geräusche im Kofferraum 1 nicht in den Personeninnenraum 2 dringen, ist eine akustische Abdichtung vorgesehen, die durch einen Faltenbalg 8 gebildet wird, der mit einem Ende an der Trennwand 3 und mit seinem anderen Ende im vorderen Randbereich 11 des Kofferraums 1 befestigt ist. Er ist in der vorderen Position der Trennwand 3' punktiert dargestellt und mit 8' bezeichnet.

Um die Trennwand 3 zur Vergrößerung des Kofferraumes 1 in die vordere Position 3' bewegen zu können, ist die Rücksitzbank 9 auf nicht dargestellten Schienen vor- und zurückverfahrbar. Zugleich weist sie eine nach vorne verstellbare Rückenlehne 10 auf.

## Patentansprüche

1. Pkw mit einem Heckkofferraum, der durch eine Trennwand hinter den Rücksitzen vom Innenraum abgetrennt ist, dadurch gekennzeichnet, daß sowohl die Trennwand (3) wie die Rücksitze (9) vor- und zurückbeweglich ausgebildet sind und eine akustische Abdichtung zwischen der Trennwand (3) und dem Kofferraumrand (11) vorgesehen ist.

2. Pkw nach Anspruch 1, dadurch gekennzeichnet, daß die akustische Abdichtung durch einen Faltenbalg (8) gebildet wird.

3. Pkw nach Anspruch 1 oder 2, dadurch gekennzeichnet, daß die Rücksitze (10) auf Laufschienen vor- und zurückverfahrbar sind und/oder eine verschwenkbare Rückenlehne (10) aufweisen.

4. Pkw nach einem der Ansprüche 1 bis 3, dadurch gekennzeichnet, daß die Trennwand (3) mit wenigstens einem Querträger (5, 6) und/oder einem Stützträger (7) verriegelbar ist.

5. Pkw nach einem der vorstehenden Ansprüche, dadurch gekennzeichnet, daß eine Fangeinrichtung vorgesehen ist, die die Bewegung der Trennwand (3) nach vorne begrenzt.

6. Pkw nach einem der vorstehenden Ansprüche, dadurch gekennzeichnet, daß die Trennwand (3) lösbar befestigt ist.
